# EUROPEAN PATENT SPECIFICATION

(11) **EP 3 012 124 B1**
(45) Date of publication and mention of the grant of the patent: **21.06.2017**
(21) Application number: 15187539.0
(22) Date of filing: 30.09.2015
(51) Int. Cl.: B60C 23/00

(54) **AXLE ASSEMBLY FOR A TIRE INFLATION SYSTEM**
ACHSENANORDNUNG FÜR EIN REIFENFÜLLSYSTEM
ENSEMBLE D'AXE POUR SYSTÈME DE GONFLAGE DE PNEUS

(30) Priority: 22.10.2014 US 201414521111
(43) Date of publication of application: 27.04.2016
(73) Proprietor: Deere & Company, Moline, IL 61265 (US)
(72) Inventor: Lubben, Jeff, Hudson, IA Iowa 50643 (US)
(74) Representative: Dehnhardt, Florian Christopher

(56) References cited:
- WO-A1-2013/056988
- DE-A1-102010 054 366
- US-A- 5 253 688

## Description

The present invention relates to an axle assembly for a tire inflation system.

Central tire inflation systems especially in agricultural applications have been designed to adjust tire inflation so that tires will have better performance during different situations, such as during transport duty and during operation in the field. For example, to reduce undesirable compacting of the ground, systems for regulating tire pressure can reduce tire pressure during field operation in contrast to the higher pressure used during on-road operation. Certain vehicles, such as agricultural tractors, have rack and pinion "bar" type axles so that the wheels and tires can be placed at different positions on the axle. This allows the tread width of the vehicle to adapted to different situations. It is desired to provide an axle assembly which works with a tire inflation system on a vehicle which has an adjustable tread width. US 6 435 238 B1 shows a stationary axle with air conduits and ABS cables routed through the interior of the non-rotating axle. Furthermore, US 1 794 900 A, US 4 387 931 A, US 6 435 238 B1 and US 6 145 559 A show designs where tire pressure passages pass through a vehicle axle. However, none of these designs provide for both a supply pressure and a pilot pressure for a tire inflation control valve. And, none of these designs can accommodate a wheel and tire which can be placed at different positions on the axle.

US5,253,688 discloses an axle assembly for a tire inflation system, the axle assembly having a pilot operated wheel control valve for controlling tire pressure as a function of a pilot pressure, the axle assembly supporting a wheel hub which is adjustable in a plurality of positions; an axle housing and an axle rotatably supported by the axle housing; a flexible supply air hose connected to the supply outlet and a flexible pilot air hose connected to the pilot outlet.

WO2013/056988 A1 discloses a supply passage extending axially along a central axis of an axle from a first passage end to a second passage end and a pilot conduit extending through the supply passage.

These and other objects are achieved by the present invention, wherein an axle assembly for a tire inflation system is provided. The axle assembly comprises a pilot operated wheel control valve for controlling tire pressure as a function of a pilot pressure. The axle assembly supports a wheel hub which is adjustable in a plurality of positions. The axle assembly further comprises an axle housing and an axle which is rotatably supported by the axle housing. A supply passage extends axially along a central axis of the axle from a first passage end to a second passage end. A pilot conduit extends through the supply passage and extends from a first conduit end to a second conduit end. A supply inlet is provided for communicating a source of supply pressure with the first passage end of the supply passage. A supply outlet communicates the second passage end of the supply passage with the pilot operated wheel control valve. A pilot inlet is provided for communicating a source of pilot pressure with the first conduit end of the pilot conduit. A pilot outlet communicates the second conduit end of the pilot conduit with the pilot operated wheel control valve. A flexible supply air hose is connected to the supply outlet. A flexible pilot air hose is connected to the pilot outlet, wherein the supply and pilot hoses are coiled around an outer surface of the axle.

For a complete understanding of the objects, techniques, and structure of the invention reference should be made to the following detailed description and accompanying drawings:
- Fig. 1: is a schematic diagram of a tire inflation system embodying the invention,
- Fig. 2: is a sectional view of an axle assembly of the tire inflation system of Fig. 1, and
- Fig. 3: is a side view of the axle assembly of Fig. 2.

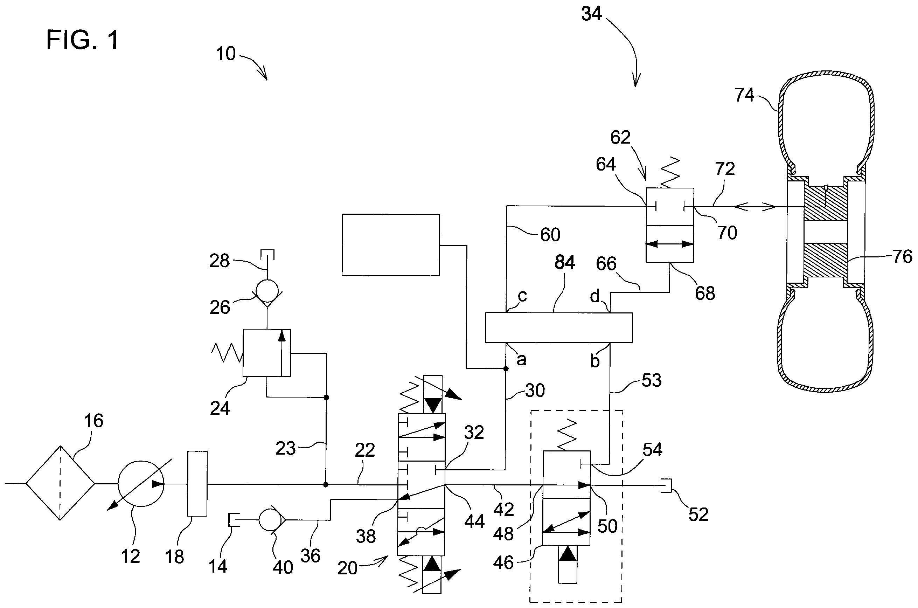

Referring to Fig. 1, a tire inflation system 10 includes an air compressor 12 and an atmospheric vent 14. The air compressor 12 draws air from a filter 16 and may push the air through a dryer 18 to an inlet of a solenoid operated inflation/deflation control valve 20. A line 22 between dryer 18 and control valve 20 is connected to a vent 28 by line 23, a pressure relief valve 24 and a check valve 26. A supply line 30 communicates a supply outlet 32 of inflation/deflation control valve 20 to an axle assembly 34 which is part of the tire inflation system 10. An exhaust line 36 communicates port 38 of inflation/deflation control valve 20 through a check valve 40 to the atmospheric vent 14. Line 42 communicates port 44 of inflation/deflation control valve 20 to port 48 of wheel pressure control valve 46. Port 50 of wheel pressure control valve 46 is communicated to a vent 52. Line 53 communicates port 54 of wheel pressure control valve 46 to the axle assembly 34.

Line 60 communicates axle assembly 34 to a supply port 64 of pilot operated wheel control valve 62. Line 66 communicates axle assembly 34 to a pilot port 68 of pilot operated wheel control valve 62. Line 72 communicates outlet 70 of pilot operated wheel control valve 62 to a tire 74 which is mounted on a wheel hub 76. The above description applies to a tire inflation system 10 for a single tire 74. The tire inflation system 10 could be also applied to additional tires (not shown) by adding additional control valves such as control valves 46 and 62 for each tire.

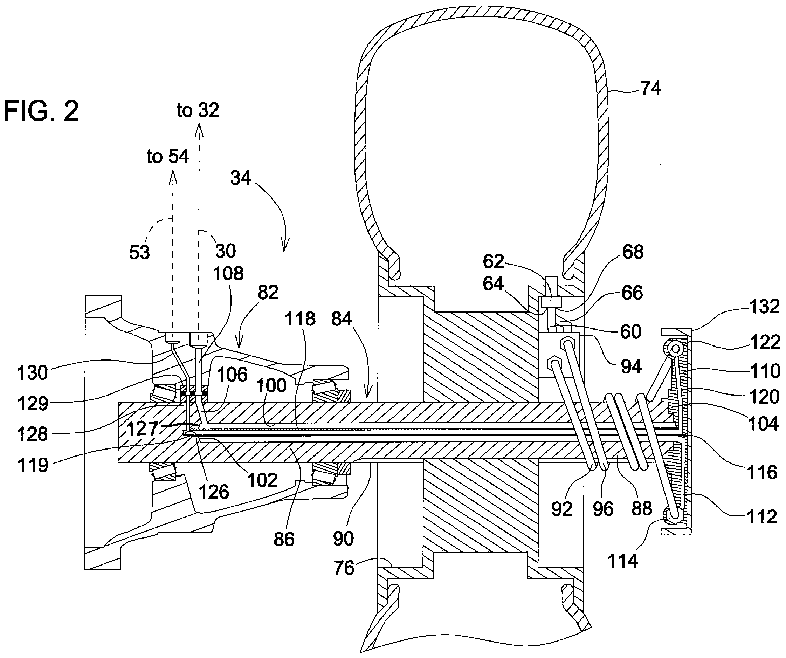

Referring now to Fig. 2, the axle assembly 34 includes an axle housing 82 and an axle 84. An inboard end 86 of axle 84 is received by and rotatably supported by the axle housing 82. An outboard portion 88 of axle 84 supports the wheel hub 76 and includes a conventional rack 90 which is used to adjust the position of the wheel hub 76 in a known manner.

A central axial supply bore 100 is formed in the axle 84 and extends from an end wall 102 to an axially outer end 104 of the axle 84. A radial supply passage 106 extends though the axle 84 and communicates a first end of central axial supply bore 100 to the exterior of the axle 84. A radial supply passage 108 extends through the axle housing 82 and communicates radial supply passage 106 to the exterior of the axle housing 82 and with exhaust line 30.

An end plate 110 is sealingly attached to and covers the axially outer end 104 of the axle 84. A radial passage 112 extends through the end plate 110 and communicates the outer end of central axial supply bore 100 with a supply outlet 114 and with line 60. A central axial pilot bore 116 opens toward the axle 84 and extends part way into the end plate 110. Central axial pilot bore 116 receives and supports the outer end of pilot conduit 118. A radial passage 120 extends through the end plate 110 and communicates central axial pilot bore 116 with a pilot outlet 122 and with line 66. A flexible supply air hose 92 is coiled around the axle 84 and connects supply outlet 114 with a manifold 94 and line 60. A flexible pilot air hose 96 is coiled around the axle 84 and connects pilot outlet 122 with manifold 94 and line 66. The air hoses 92 and 96 are coiled around a portion of the axle 84 between the end plate 110 and the wheel hub 76. The air hoses 92 and 96 flex to maintain a connection between lines 30 and 53 and the pilot operated wheel control valve 62 as the wheel hub 76 is moved axially to different positions on the axle 84.

Pilot conduit 118 extends through the entire length of central axial supply bore 100, is coaxial with central axial supply bore 100, and has a smaller diameter than the diameter of central axial supply bore 100. The larger diameter central axial supply bore 100 and the smaller diameter central axial pilot bore 116 have a common axis. The axle housing 82 surrounds the inner portion 86 of the axle 84, surrounds an inner end of the central axial supply bore 100, and surrounds an inner end 119 of the pilot conduit 118. The central axial supply bore 100 and the pilot conduit 118 are both coaxial with a central rotation axis of the axle 84 and are symmetrical with respect to that axis.

A central axial pilot bore 126 extends into the axle 84 axially inwardly from end wall 102. Central axial pilot bore 126 is a blind bore, and has a diameter which is smaller than the diameter of central axial supply bore 100. Central axial pilot bore 126 receives and supports an inner end of pilot conduit 118, and communicates the interior of pilot conduit 118 with a radial pilot passage 128. Central axial pilot bore 126 has a stepped diameter which forms an annular shoulder 127 which engages an end of the pilot conduit 118.

Radial pilot passage 128 extends radially through the axle 84 and communicates central axial pilot bore 126 with the outer surface of the axle 84. A radial supply passage 130 extends through the axle housing 82 and communicates radial pilot passage 128 to the exterior of the axle housing 82 and to line 53. Seals 129 seal the radial supply and pilot passages 130 and 128 from each other and from the environment. A circular cover plate 132 covers the end plate 110.

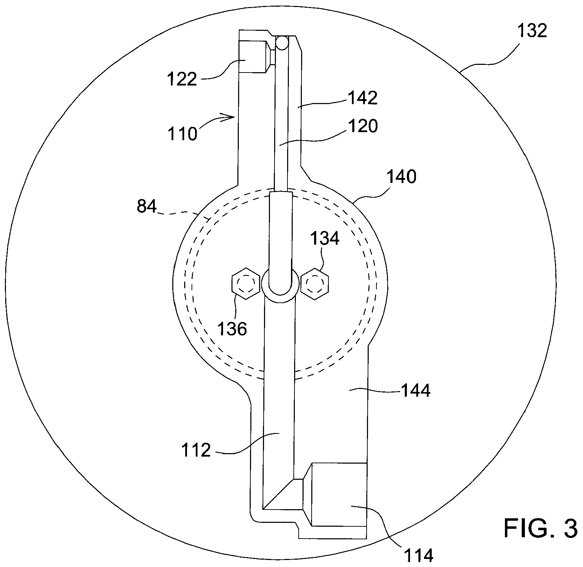

As best seen in Fig. 3, the end plate 110 includes a central hub 140 and a pair of arms 142 and 144 which project radially outwardly from the central hub 140 to clear the wheel hub 76. Bolts 134 and 136 extend through cover plate 132 and through end plate 110 and are threadably received by threaded bores (not shown) in the axially outer end 104 of axle 84.

The result is an axle assembly 34 which communicates a controlled supply of pressurized air to a tire 74 which can be placed at different positions on the axle 84. The air passages formed by central axial supply bore 100 and pilot conduit 118 are routed through axle housing 82 which protects the air passages from external damage. The tread width can be changed without disturbing the tire inflation system 10. The central axial supply passage 100 has a larger diameter than the pilot conduit 118 so that tire 74 can be rapidly inflated or deflated.

## Claims

1. An axle assembly for a tire inflation system, the axle assembly (34) having a pilot operated wheel control valve (62) for controlling tire pressure as a function of a pilot pressure, the axle assembly (34) supporting a wheel hub (76) which is adjustable in a plurality of positions; an axle housing (82); an axle (84) rotatably supported by the axle housing (82); a supply passage (100) extending axially along a central axis of the axle (84) from a first passage end to a second passage end (104); a pilot conduit (118) extending through the supply passage (100) and extending from a first conduit end (119) to a second conduit end; a supply inlet (108) for communicating a source of supply pressure (12) with the first passage end of the supply passage (100); a supply outlet (114) communicating the second passage end (104) of the supply passage (100) with the pilot operated wheel control valve (62); a pilot inlet (128) for communicating a source of pilot pressure (46) with the first conduit end (119) of the pilot conduit (118); a pilot outlet (122) communicating the second conduit end of the pilot conduit (118) with the pilot operated wheel control valve (62); a flexible supply air hose (92) connected to the supply outlet (114); and a flexible pilot air hose (96) connected to the pilot outlet (122), wherein the supply and pilot air hoses (92, 96) are coiled around an outer surface of the axle (84).

2. The axle assembly according to claim 1, **characterized in that** the axle (84) comprises a larger diameter central axial supply bore (100) and a smaller diameter pilot bore (126) projecting axially from a first end of the central axial supply bore (100), the central axial supply bore (100) terminating at a first end wall (102) formed by the axle (84), and the pilot conduit (118) extends through said first end wall (102), and an inner end (119) of the pilot conduit (118) is received by a portion of the pilot bore (126).

3. The axle assembly according to claim 2, **characterized in that** the larger diameter central axial supply bore (100) and the smaller diameter pilot bore (126) have a common axis.

4. The axle assembly according to claim 2 or 3, **characterized in that** the smaller diameter pilot bore (126) has a stepped diameter which forms an annular shoulder (127) which engages the inner end (119) of the pilot conduit (118).

5. The axle assembly according to one of claims 1 to 4, **characterized in that** the supply passage (100) extends away from the axle housing (82) and towards an outboard portion (88) of the axle (84).

6. The axle assembly according to one of claims 1 to 5, **characterized in that** the axle housing (82) surrounds a portion of the axle (84), surrounds an inner end of the supply passage (100) and surrounds an inner end (119) of the pilot conduit (118).

7. The axle assembly according to one of claims 1 to 6, **characterized in that** an end plate (110) sealingly engages an outer end (104) of the axle (82), a plate supply bore (112) extends radially through the end plate (110) and communicates the supply passage (100) to the supply outlet (114), and a plate pilot bore (120) extends radially through the end plate (110) and communicates the pilot conduit (118) to the pilot outlet (122).

## Patentansprüche

1. Achsanordnung für ein Reifenaufblassystem, wobei die Achsanordnung (34) ein vorgesteuertes Radsteuerventil (62) zum Steuern des Reifendrucks in Abhängigkeit von einem Vorsteuerdruck, wobei die Achsanordnung (34) eine Radnabe (76) stützt, die in mehrere Stellungen einstellbar ist; ein Achsgehäuse (82); eine Achse (84), die durch das Achsgehäuse (82) drehbar gestützt wird; einen Zufuhrkanal (100), der sich axial entlang einer Mittelachse der Achse (84) von einem ersten Kanalende zu einem zweiten Kanalende (104) erstreckt; eine Vorsteuerleitung (118), die sich durch den Zufuhrkanal (100) erstreckt und sich von einem ersten Leitungsende (119) zu einem zweiten Leitungsende erstreckt; einen Zufuhreinlass (108) zur Verbindung einer Zufuhrdruckquelle (12) mit dem ersten Kanalende des Zufuhrkanals (100); einen Zufuhrauslass (114), der das zweite Kanalende (104) des Zufuhrkanals (100) mit dem vorgesteuerten Radsteuerventil (62) verbindet; einen Vorsteuereinlass (128) zur Verbindung einer Vorsteuerdruckquelle (46) mit dem ersten Leitungsende (119) der Vorsteuerleitung (118); einen Vorsteuerauslass (122) der das zweite Leitungsende der Vorsteuerleitung (118) mit dem vorgesteuerten Radsteuerventil (62) verbindet; einen flexiblen Zufuhrluftschlauch (92), der mit dem Zufuhrauslass (114) verbunden ist; und einen flexiblen Vorsteuerluftschlauch (96), der mit dem Vorsteuerauslass (122) verbunden ist, wobei der Zufuhr- und der Vorsteuerluftschlauch (92, 96) um eine Außenfläche der Achse (84) herum gewickelt sind, aufweist.

2. Achsanordnung nach Anspruch 1, **dadurch gekennzeichnet, dass** die Achse (84) eine einen größeren Durchmesser aufweisende zentrale axiale Zufuhrbohrung (100) und eine einen kleineren Durchmesser aufweisende Vorsteuerbohrung (126), die axial von einem ersten Ende der zentralen axialen Zufuhrbohrung (100) vorragt, umfasst, wobei die zentrale axiale Zufuhrbohrung (100) an einer ersten Endwand (102), die durch die Achse (84) gebildet wird, endet und sich die Vorsteuerleitung (118) durch die erste Endwand (102) hindurch erstreckt und ein inneres Ende (119) der Vorsteuerleitung (118) durch einen Abschnitt der Vorsteuerbohrung (126) aufgenommen wird.

3. Achsanordnung nach Anspruch 2, **dadurch gekennzeichnet, dass** die einen größeren Durchmesser aufweisende zentrale axiale Zufuhrbohrung (100) und die einen kleineren Durchmesser aufweisende Vorsteuerbohrung (126) eine gemeinsame Achse aufweisen.

4. Achsanordnung nach Anspruch 2 oder 3, **dadurch gekennzeichnet, dass** die einen kleineren Durchmesser aufweisende Vorsteuerbohrung (126) einen abgestuften Durchmesser aufweist, der eine ringförmige Schulter (127) bildet, die mit dem inneren Ende (119) der Vorsteuerleitung (118) in Eingriff gelangt.

5. Achsanordnung nach einem der Ansprüche 1-4, **dadurch gekennzeichnet, dass** sich der Zufuhrkanal (100) von dem Achsgehäuse (82) weg und zu einem äußeren Abschnitt (88) der Achse (84) hin erstreckt.

6. Achsanordnung nach einem der Ansprüche 1-5, **dadurch gekennzeichnet, dass** das Achsgehäuse (82) einen Abschnitt der Achse (84) umgibt, ein inneres Ende des Zufuhrkanals (100) umgibt und ein inneres Ende (119) der Vorsteuerleitung (118) umgibt.

7. Achsanordnung nach einem der Ansprüche 1-6, **dadurch gekennzeichnet, dass** eine Endplatte (110) mit einem äußeren Ende (104) der Achse (82) in Dichteingriff gelangt, sich eine Plattenzufuhrbohrung (112) radial durch die Endplatte (110) erstreckt und den Zufuhrkanal (100) mit dem Zufuhrauslass (114) verbindet, und sich eine Plattenvorsteuerbohrung (120) radial durch die Endplatte (110) erstreckt und die Vorsteuerleitung (118) mit dem Vorsteuerauslass (112) verbindet.

## Revendications

1. Ensemble formant essieu pour système de gonflage de pneumatique, l'ensemble formant essieu (34) comportant une valve de commande de roue pilotée (62) servant à commander la pression du pneumatique en fonction d'une pression de pilotage, l'ensemble formant essieu (34) supportant un moyeu de roue (76) qui peut être ajusté à une pluralité de positions ; un logement d'essieu (82) ; un essieu (84) supporté à rotation par le logement d'essieu (82) ; un passage d'alimentation (100) s'étendant axialement le long d'un axe central de l'essieu (84) d'une première extrémité de passage à une seconde extrémité de passage (104) ; un conduit de pilotage (118) s'étendant à travers le passage d'alimentation (100) et s'étendant d'une première extrémité de conduit (119) à une seconde extrémité de conduit ; une entrée d'alimentation (108) servant à relier une source de pression d'alimentation (12) à la première extrémité de passage du passage d'alimentation (100) ; une sortie d'alimentation (114) reliant la seconde extrémité de passage (104) du passage d'alimentation (100) à la valve de commande de roue pilotée (62) ; une entrée de pilotage (128) servant à relier une source de pression de pilotage (46) à la première extrémité de conduit (119) du conduit de pilotage (118) ; une sortie de pilotage (122) reliant la seconde extrémité de conduit du conduit de pilotage (118) à la valve de commande de roue pilotée (62) ; un tuyau à air flexible d'alimentation (92) raccordé à la sortie d'alimentation (114) ; et un tuyau à air flexible de pilotage (96) raccordé à la sortie de pilotage (122), les tuyaux à air d'alimentation et de pilotage (92, 96) étant enroulés autour d'une surface extérieure de l'essieu (84).

2. Ensemble formant essieu selon la revendication 1, **caractérisé en ce que** l'essieu (84) comprend un orifice d'alimentation axial central (100) de plus grand diamètre et un orifice de pilotage (126) de plus petit diamètre faisant saillie axialement à partir d'une première extrémité de l'orifice d'alimentation axial central (100), l'orifice d'alimentation axial central (100) se terminant au niveau d'une première paroi d'extrémité (102) formée par l'essieu (84), et le conduit de pilotage (118) s'étend à travers ladite première paroi d'extrémité (102), et une extrémité intérieure (119) du conduit de pilotage (118) est reçue par une partie de l'orifice de pilotage (126).

3. Ensemble formant essieu selon la revendication 2, **caractérisé en ce que** l'orifice d'alimentation axial central (100) de plus grand diamètre et l'orifice de pilotage (126) de plus petit diamètre possèdent un axe commun.

4. Ensemble formant essieu selon la revendication 2 ou 3, **caractérisé en ce que** l'orifice de pilotage (126) de plus petit diamètre présente un diamètre étagé qui forme un épaulement annulaire (127) qui vient en prise avec l'extrémité intérieure (119) du conduit de pilotage (118).

5. Ensemble formant essieu selon l'une des revendications 1 à 4, **caractérisé en ce que** le passage d'alimentation (100) s'étend dans une direction s'éloignant du logement d'essieu (82) et allant vers une partie extérieure (88) de l'essieu (84).

6. Ensemble formant essieu selon l'une des revendications 1 à 5, **caractérisé en ce que** le logement d'essieu (82) entoure une partie de l'essieu (84), entoure une extrémité intérieure du passage d'alimentation (100) et entoure une extrémité intérieure (119) du conduit de pilotage (118).

7. Ensemble formant essieu selon l'une des revendications 1 à 6, **caractérisé en ce qu'**une plaque d'extrémité (110) vient en prise à étanchéité avec une extrémité extérieure (104) de l'essieu (82), un orifice d'alimentation de plaque (112) s'étend radialement à travers la plaque d'extrémité (110) et relie le passage d'alimentation (100) à la sortie d'alimentation (114), et un orifice de pilotage de plaque (120) s'étend radialement à travers la plaque d'extrémité (110) et relie le conduit de pilotage (118) à la sortie de pilotage (122).
